# EUROPÄISCHE PATENTSCHRIFT

(11) **EP 3 850 291 B1**
(45) Veröffentlichungstag und Bekanntmachung des Hinweises auf die Patenterteilung: **26.06.2024**
(21) Anmeldenummer: 19769009.2
(22) Anmeldetag: 11.09.2019
(51) Int. Cl.: F28D 9/00, F28F 3/02

(54) **VERFAHREN ZUR FESTIGKEITS- UND LEBENSDAUERBERECHNUNG EINES FLUIDDURCHSTRÖMTEN VERFAHRENSTECHNISCHEN APPARATS**
METHOD FOR CALCULATING THE STABILITY OF A PROCEDURAL APPARATUS WITH FLUID FLOWING THROUGH IT
PROCÉDÉ DE CALCUL DE RÉSISTANCE D'UN APPAREIL TECHNIQUE PARCOURU PAR UN FLUIDE

(30) Priorität: 13.09.2018 EP 18020448
(43) Veröffentlichungstag der Anmeldung: 21.07.2021
(73) Patentinhaber: Linde GmbH, 82049 Pullach (DE)
(72) Erfinder: STEINBAUER, Manfred, 82399 Raisting (DE); FLÜGGEN, Rainer, 83673 Bichl (DE); FREKO, Pascal, 82547 Eurasburg (DE); HEINZ, Paul, 80634 München (DE); WOITALKA, Alexander, 81369 München (DE); HAIDER, Patrick, 84405 Dorfen (DE); MEHANOVIC, Dino, 81249 München (DE); REITER, Thomas, 83075 Bad Feilnbach (DE)
(74) Vertreter: Meilinger, Claudia Sabine
(86) Internationale Anmeldenummer: PCT/EP2019/025305
(87) Internationale Veröffentlichungsnummer: WO 2020/052813

(56) Entgegenhaltungen:
- EP-A2- 2 887 168
- EP-B1- 1 830 149
- DE-A1-102009 042 994
- US-A1- 2007 136 037
- US-A1- 2015 094 988

## Beschreibung

Die Erfindung betrifft ein Verfahren zur Festigkeits- und Lebensdauerberechnung eines fluiddurchströmten verfahrenstechnischen Apparats.

### Stand der Technik

Als verfahrenstechnische Anlagen werden üblicherweise Anlagen zur Durchführung von Stoffänderungen und/oder Stoffumsetzungen mit Hilfe zweckgerichteter physikalischer und/oder chemischer und/oder biologischer und/oder nuklearer Wirkungsabläufe verstanden. Solche Änderungen und Umsetzungen umfassen typischerweise Zerkleinern, Sieben, Mischen, Wärmeübertragen, Rektifizieren, Kristallisieren, Trocknen, Abkühlen, Abfüllen und überlagerte Stoffumwandlungen, wie chemische, biologische oder nukleare Reaktionen

Fluiddurchströmte verfahrenstechnische Apparate, wie z.B. vakuumgelötete Aluminiumplattenwärmeübertrager (engl. "plate fin heat exchanger", PFHE) werden oftmals in verfahrenstechnischen Anlagen aufgrund einer Vielzahl von Vorzügen (Wärmeintegration, Kompaktheit, Kosten) eingesetzt.

Derartige Apparate können bei beispielsweise Anlagenstörfällen, Sonderbetriebsfällen oder Anfahr- und Abstellvorgängen thermischen Belastungen unterliegen und hohen Spannungsschwankungen ausgesetzt sein, welche zu einer Materialermüdung bis hin zu Beschädigungen wie Leckagen führen können, was mit aufwendigen und kostenintensiven Reparaturen und ungeplanten Anlagenausfällen verbunden sein kann. In bestimmten Situationen können Apparate wie z.B. Wärmetauscher oder Kolonnen thermische bzw. mechanische Spannungen erfahren, die zu einer Materialermüdung führen können.

Um Störungen, Fehler, Ausfälle usw. möglichst früh erkennen bzw. verhindern zu können, wird angestrebt die mechanischen Spannungen von Apparaten zu bestimmen, um im Zuge einer Lebendsaueranalyse z.B. eine Ausfallwahrscheinlichkeit oder verbleibende Lebensdauer der Apparate zu bestimmen. Jedoch ist die Bestimmung von mechanischen Spannungen in fluiddurchströmten, verfahrenstechnischen Apparaten zumeist mit hoher Komplexität und hohem Zeitbedarf verbunden und kann zumeist nicht in Echtzeit, sondern nur offline erfolgen.

Aus der DE 10 2009 042 994 A1 ist ein Verfahren zum Überwachen eines thermisch belasteten Apparates bekannt, z.B. eines Wärmetauschers. Dabei wird an lokalen, örtlich begrenzten Stellen innerhalb des Apparats jeweils eine Temperatur gemessen. Diese Temperaturmesswerte werden mit Temperatursollwerten oder Temperaturgrenzwerten verglichen. Diese Temperatursoll- bzw. Temperaturgrenzwerte können aus Festigkeitsberechnungen für die lokalen Stellen ermittelt werden. Aus Festigkeitskennwerten der für den Apparat verwendeten Werkstoffe können maximal erlaubte Spannungen berechnet und daraus erlaubte Temperaturgrenzwerte für die lokalen Stellen ermittelt werden. Durch den Vergleich der Temperaturmesswerte mit den Soll- bzw. Grenzwerten sollen lokale thermische Spannungsüberschreitungen und damit Beschädigungen am Apparat durch rechtzeitiges Einleiten von Sicherheitsmaßnahmen verhindert werden.

Die DE 10 2009 042 994 A1 lehrt somit, Temperaturen in einem Apparat zu messen und mit Schwellwerten zu vergleichen, um Beschädigungen an dem Apparat erkennen zu können. Jedoch stellt ein derartiger Temperaturvergleich eine eher ungenaue Überwachungsmöglichkeit dar. Eine tatsächliche präzise Bestimmung mechanischer Spannungen wäre wünschenswert.

Die EP 2 887 168 A2 betrifft den Betrieb von Maschinen wie Gasturbinenmotoren. Betriebsparameter der Maschine werden erfasst. Diese erfassten Betriebsparameter werden einerseits verwendet, um erste Eigenschaften der Maschine bezüglich eines Verschleißes der Maschine zu bestimmen. Andererseits werden die erfassten Betriebsparameter verwendet, um zweite, thermische Eigenschaften der Maschine zu bestimmen, etwa thermische Spannungen in der Maschine. In Abhängigkeit von diesen ersten und zweiten Eigenschaften wird eine verbleibende Lebensdauer von Komponenten der Maschine bestimmt. Ferner lehrt die EP 2 887 168 A2 ein empirisches thermisches Model reduzierter Ordnung zu verwenden, um Informationen von Sensoren auszuwerten, wobei diese Informationen Temperaturen von Komponenten der Maschine umfassen können. Das Model kann Informationen wie Spannungskurven der Maschinenkomponenten umfassen. Ergebnis dieses Modells können zusammen mit den Informationen der Sensoren zur Berechnung der verbleibenden Lebensdauer verwendet werden.

Ein derartiges empirisches Modell reduzierter Ordnung ist oftmals mit Annahmen und Vereinfachungen versehen. Es wäre wünschenswert, ein Temperaturfeld in einer Genauigkeit, die hinreichend ist, zu messen und direkt als Eingangsgröße für eine Spannungsberechnung nutzen zu können, um mechanische Spannungen von Apparaten zur Lebensdaueranalyse präzise bestimmen zu können.

### Offenbarung der Erfindung

Vor diesem Hintergrund schlägt die vorliegende Erfindung ein Verfahren zur Festigkeits- und Lebensdauerberechnung eines fluiddurchströmten verfahrenstechnischen Apparats mit den Merkmalen des unabhängigen Patentanspruchs 1 vor. Vorteilhafte Ausgestaltungen sind Gegenstand der Unteransprüche sowie der nachfolgenden Beschreibung.

Der fluiddurchströmte verfahrenstechnische Apparat kann insbesondere als ein Wärmetauscher, insbesondere als ein Plattenwärmetauscher oder Spiral- oder gewickelter Wärmetauscher, oder als eine Kolonne (hohle, schlanke Säule mit Einbauten) oder als Phasentrennapparat (Behälter mit Einbauten) ausgebildet sein. Der Apparat kann zweckmäßigerweise als eine Komponente einer verfahrenstechnischen Anlage ausgebildet und mit weiteren Anlagenkomponenten verbunden sein, beispielsweise mit weiteren Wärmetauschern, Kolonnen oder Behältern zur Phasentrennung.

Im Rahmen der vorliegenden Erfindung werden an mehreren unterschiedlichen Stellen des Apparats herrschende Temperaturen gemessen, um Temperaturmesswerte zu erhalten. Zu diesem Zweck ist in bzw. an dem Apparat zweckmäßigerweise eine Vielzahl entsprechender Sensoren angeordnet. Insbesondere wird somit eine Vielzahl verschiedener Temperaturmesswerte während des laufenden Betriebs des Apparats erfasst, insbesondere an verschiedenen Stellen in dem Apparat und zu unterschiedliche Zeitpunkten.

Die Temperaturmesswerte gehen als Randbedingungen in eine Finite-Elemente-Methode ein, um eine Festigkeitsberechnung durchzuführen. Im Falle einer mechanischen Festigkeitsberechnung erhält man als Ergebnis einer Finite-Elemente-Methode insbesondere an mehreren unterschiedlichen Stellen in einem Material des Apparats herrschende Spannungen und Dehnungen, aus denen eine verbleibende Lebensdauer des Materials des Apparats abgeschätzt werden kann.

Aus den erhaltenen Spannungswerten wird somit eine verbleibende Lebensdauer des Materials des Apparats bestimmt. Ferner wird die verbleibende Lebensdauer im Rahmen der vorliegenden Erfindung in Abhängigkeit von Daten bezüglich des Apparats bestimmt, die zu einem zweiten Zeitpunkt bestimmt wurden, der früher als der erste Zeitpunkt ist. Insbesondere werden somit neben den aktuell erfassten Temperaturmesswerten auch frühere Daten für die Lebensdaueranalyse berücksichtigt, um die verbleibende Lebensdauer möglichst exakt abschätzen zu können. Die früheren Daten können beispielsweise in einer Speichereinheit hinterlegt sein, z.B. in einer Speichereinheit eines Steuergeräts des Apparats, oder auch in einer entfernten Recheneinheit, insbesondere in einer Cloud.

Besonders vorteilhaft umfassen die Daten bezüglich des Apparats Ergebnisse von Finite-Elemente-Methoden, die zu dem zweiten, früheren Zeitpunkt bestimmt wurden. Zur Bestimmung der aktuellen mechanischen Spannungen und der aktuellen verbleibenden Lebensdauer zum aktuellen ersten Zeitpunkt wird somit besonders zweckmäßig auf Ergebnisse von zu dem früheren Zeitpunkt durchgeführten Finite-Elemente-Methoden zurückgegriffen.

Im Rahmen der vorliegenden Erfindung wird somit ein selbstlernender Algorithmus bereitgestellt, der beispielsweise bereits in der Vergangenheit analysierte Prozessrandbedingungen und durchgeführten Finite-Elemente-Methoden erkennt und bereits verfügbare Ergebnisse nutzt. Insbesondere werden daher auch die Spannungswerte als Ergebnis der Finite-Elemente-Methode mit zugehörigen Randbedingungen in der Speichereinheit zur späteren Verwendung im Verfahren hinterlegt. Als Randbedingungen werden insbesondere Temperaturmesswerte und/oder aus den Temperaturmesswerten ermittelte Temperaturrechenwerte verwendet. Vorzugsweise handelt es sich bei den Temperaturrechenwerten um orts- und/oder zeitabhängige Temperaturdifferenzen, d.h. zeitliche öder örtliche Temperaturgradienten. Es hat sich nämlich gezeigt, dass ein Lebensdauerverbrauch im Wesentlichen von Temperaturgradienten im Material abhängt.

Durch ein Hybridmodell aus Finite-Elemente-Methode für unbekannte Fahrfälle und Wiederverwendung von Ergebnissen bereits durchgeführter Spannungsanalysen durch einen selbstlernenden Algorithmus ist ein Optimum an Genauigkeit und Performance gegeben.

Die Wiederverwendung früherer Ergebnisse kann insbesondere eine Interpolation oder Extrapolation der Randbedingungen oder die Übernahme früherer Ergebnisse von nahe liegenden Randbedingungen umfassen.

Vorzugsweise wird in diesem Zusammenhang auch eine Sensitivität der Randbedingungen auf die Lebensdauervorhersage berücksichtigt. Ist beispielsweise die Sensitivität hoch, d.h. wirken sich schon geringe Änderungen signifikant aus, sind eine Interpolation oder Extrapolation der Randbedingungen zu bevorzugen. Es versteht sich, dass dabei auch eine erkannte Form der Zusammenhänge, z.B. linear, exponentiell usw., berücksichtigt werden kann. Ist hingegen die Sensitivität schwach, d.h. wirken sich nur sehr große Änderungen signifikant aus, können auch frühere Ergebnisse unverändert übernommen werden. Zweckmäßigerweise erfolgt eine Wiederverwendung dabei immer in Richtung des größeren Lebensdauerverbrauchs, um keine Unterschätzung zu erhalten.

Die Temperaturmesswerte können insbesondere direkt als Randbedingungen in die Finite-Elemente-Methode eingehen oder auch indirekt, wobei die Temperaturmesswerte zunächst beispielsweise aufbereitet werden und wobei die aufbereiteten Temperaturmesswerte als Randbedingungen verwendet werden. Beispielsweise ist es denkbar, dass die Temperaturmesswerte zunächst mit Hilfe eines Zwischenmodells auf eine höhere Mannigfaltigkeit projiziert werden, beispielsweise indem gemessene 1D-Temperaturen auf 2D- oder 3D-Temperaturen projiziert werden.

Somit werden in dem Material des verfahrenstechnischen Apparats herrschende mechanische Spannungen und/oder Dehnungen bestimmt, insbesondere in Form von Spannungsniveaus bzw. Spannungsverläufen und/oder lokalen Dehnungen. Die Lebensdauer des fluiddurchströmten verfahrenstechnischen Apparats wird maßgeblich von der Anzahl von Spannungsveränderungen und/oder Dehnungen einer gewissen Größe bestimmt. Solche Veränderungen treten typischerweise beim Hochfahren des Apparats, beim Wechsel zwischen unterschiedlichen Betriebsszenarios oder in Folge von Prozessstörungen auf, die zum Beispiel durch Maschinen- oder Ventilfehler verursacht sind. Im Allgemeinen hängt die verbrauchte Lebenszeit stark davon ab, wie der Prozess betrieben wird, wobei jedoch das Betriebspersonal üblicherweise keine klaren Anzeichen für den Einfluss des Betriebs auf die Spannungsniveaus, die im Material des Apparats auftreten, und in der Folge auf die erwartete Lebensdauer, hat.

Da an einer Vielzahl verschiedener Stellen in dem Apparat herrschende Temperaturen erfasst werden, können Temperaturmesswerte mit hoher zeitlicher und örtlicher Auflösung erfasst werden, um insbesondere möglichst viele Randbedingungen für die Finite-Elemente-Methode vorzugeben und um vorzugsweise ein möglichst präzises Abbild des Apparats zu ermöglichen. Insbesondere kann somit ein Temperaturfeld des Gesamtapparates präzise abgeleitet werden, das als Basis für die Spannungsberechnung genutzt wird. Das Temperaturfeld kann zweckmäßigerweise in hinreichender Genauigkeit gemessen und direkt als Eingangsgröße für die Spannungsberechnung mit Hilfe der Finite-Elemente-Methode genutzt werden. Somit wird eine präzise Bestimmung der mechanischen Spannung ermöglicht.

Die Lebensdauerberechnung im Rahmen der vorliegenden Erfindung beruht zweckmäßigerweise nicht auf einem Temperaturvergleich bzw. einem Vergleich von erfassten Temperaturen mit Schwellwerten und ferner insbesondere nicht auf der Auswertung von erfassten Temperaturen mittels empirischer thermischer Modelle reduzierter Ordnung, sondern auf einer numerischen Festigkeits- bzw. Spannungsberechnung.

Die Finite-Elemente-Methode (FEM) ist ein numerisches Verfahren, welches auf dem numerischen Lösen eines komplexen Systems aus partiellen Differentialgleichungen basiert. Der Apparat wird dabei in endlich viele Teilgebiete einfacher Form aufgeteilt, sprich in finite Elemente, deren physikalisches bzw. thermo-hydraulisches Verhalten aufgrund ihrer einfachen Geometrie berechnet werden kann. In jedem der finiten Elemente werden die partiellen Differentialgleichungen durch einfache Differentialgleichungen oder durch algebraische Gleichungen ersetzt. Das somit erhaltene System aus Gleichungen wird gelöst, um eine Näherungslösung der partiellen Differentialgleichungen zu erhalten.

Das physikalische Verhalten des Gesamtkörpers wird beim Übergang von einem Element in das benachbarte Element durch vorbestimmte Stetigkeitsbedingungen nachgebildet. Die Temperaturmesswerte werden als Randbedingungen, insbesondere als verfahrenstechnische, thermo-hydraulische Randbedingungen verwendet. Derartige Randbedingungen geben Funktionswerte an Grenzen bzw. Knotenpunkten zwischen zwei Elementen bzw. Teilgebieten vor. Zu diesem Zweck ist vorzugsweise eine entsprechend hohe Anzahl von Temperatursensoren vorgesehen, um den Apparat mit hinreichend vielen Temperaturmesswerten mit hoher Auflösung abzudecken und möglichst viele Randbedingungen für die Finite-Elemente-Methode vorzugeben. Vorteilhafterweise wird somit im Unterschied zu herkömmlichen Anwendungen kein komplexes thermo-hydraulisches Simulationsmodell des Apparats zum Erzeugen der Randbedingungen benötigt.

Herkömmlicherweise werden für eine Spannungsanalyse eines Apparats im Zuge der Finite-Elemente-Methode aufwendige thermo-hydraulische Simulationsmodelle des Apparats benötigt. Ergebnisse dieser thermo-hydraulischen Simulationen sind üblicherweise ortsaufgelöste Wärmeübergangskoeffizienten und Temperaturen, welche als Randbedingungen für eine Spannungsanalyse nach der Finite-Elemente-Methode verwendet werden können. In dem FEM- Modell wird dann eine Metalltemperaturverteilung nachgerechnet. Derartige thermo-hydraulische Simulationsmodelle sind jedoch mit einem hohen Arbeits- und Entwicklungsaufwand verbunden, bedürfen hoher Rechenkapazitäten und ermöglichen oftmals keine exakte Abbildung des Apparats. Ferner ist in herkömmlichen Apparaten oftmals nur eine begrenzte Instrumentierung gegeben, insbesondere nur eine geringe Anzahl von verbauten Sensoren mit geringer Ortsauflösung, so dass sich hieraus keine exakten Temperaturfelder ableiten lassen, sondern lediglich eine gute Übereinstimmung von Simulationsmodellen und Messungen ableiten lässt. Thermo-hydraulische Simulationsmodelle sind daher mit einer gewissen Unsicherheit und Ungenauigkeit verbunden.

Im Rahmen der vorliegenden Erfindung wird jedoch kein thermo-hydraulisches Simulationsmodell benötigt, sondern die Finite-Elemente-Methode und die entsprechende Spannungsanalyse werden in Abhängigkeit von Temperaturmesswerten durchgeführt, die direkt während des Betriebs des Apparats erfasst werden. Der vorliegenden Erfindung liegt die Erkenntnis zugrunde, dass sich bei hinreichend guter Instrumentierung von Apparaten, insbesondere bei einer hinreichend großen Anzahl von Temperatursensoren mit hoher Ortsauflösung, Randbedingungen für die Finite-Elemente-Methode und Spannungsanalysen direkt aus dem verfahrenstechnischen Apparat ableiten lassen, ohne thermo-hydraulische Simulationsmodelle aufstellen zu müssen. Der Entwicklungsaufwand für die Finite-Elemente-Methode und das Bestimmen der Dehnung bzw. mechanischen Spannung kann somit gering gehalten werden. Da thermo-hydraulische Simulationsmodelle somit zweckmäßigerweise nicht mehr benötigt werden, kann deren Arbeits- und Entwicklungsaufwand eingespart werden. Ferner können die mit den thermo-hydraulischen Simulationsmodellen verbundenen Unsicherheiten und Ungenauigkeiten vermieden werden.

Insbesondere besteht ferner die Möglichkeit, eine Modellregression für das FEM-Modell durchzuführen, um Rechenaufwand für die Finite-Elemente-Methode gering halten zu können. Alternativ oder zusätzlich ist es denkbar, eine Modellordnungsreduktion (engl. Model Order Reduction, MOR) durchzuführen, um die Komplexität des FEM-Modells zu reduzieren, wodurch der für die Finite-Elemente-Methode benötigte Rechenkapazität gering gehalten werden kann.

Die Spannungs- und Lebensdaueranalyse kann durch das vorliegende Verfahren insbesondere in den Anlagenbetrieb verlagert und zweckmäßigerweise automatisiert werden. Die Messungen, die Basis für die Spannungs- und Lebendsaueranalyse sind, ersetzen die thermo-hydraulischen Simulationen, sind bei hoher zeitlicher und örtlicher Auflösung genauer und spiegeln den realen Fahrbetrieb wieder.

Die Metalltemperaturverteilung wird somit im Rahmen der vorliegenden Erfindung selbst gemessen und die gemessene Temperatur wird dem FEM-Modell als Randbedingung aufgeprägt. Der Wärmeübergang wird insbesondere so groß gewählt, dass die per FEM nachgerechnete Metalltemperaturverteilung der gemessen entspricht. Insbesondere werden für Spannungsanalysen von Thermostress mittels Finite-Elemente-Methode Temperaturfelder und Wärmeübergangskoeffizientenfelder (ein- oder mehrdimensional in Raum, stationär oder instationär) benötigt. Wenn die Wärmeübergangskoeffizienten als beliebig groß vorgegeben werden, ist es möglich, gemessene Temperaturprofile in der Finite-Elemente-Methode dem Apparat aufzuprägen und die in verfahrenstechnischen Anlagen real durchfahren Betriebszustände unmittelbar direkt und sehr exakt zu erfassen sowie spannungs- bzw. dehnungsseitig zu bewerten. Dies ist insbesondere gleichermaßen möglich für stationäre und instationäre Betriebsbedingungen.

Durch das vorliegende Verfahren wird eine apparatebezogene Lebensdaueranalyse bereitgestellt, die insbesondere online während des Betriebs des Apparats stattfinden kann, die keine Spannungs-Regression von thermo-hydraulisch simulierten Verfahrenszuständen darstellt, sondern insbesondere eine fortlaufende Lebensdaueranalyse am realen Anlagenbetrieb ermöglicht.

Die vorliegende Erfindung ermöglicht eine apparate-bezogene Online-Lebensdaueranalyse, die keine Spannungs-Regression von thermo-hydraulisch simulierten Verfahrenszuständen darstellt, sondern eine fortlaufende und selbstlernende Lebensdaueranalyse am realen Anlagenbetrieb ermöglicht. Zu diesem Zweck wird als verfahrenstechnische, thermo-hydraulische Randbedingungen für FEM-Simulationsmodelle zur Spannungsanalyse direkt auf Messungen zurückgegriffen anstelle von komplexen thermo-hydraulischen Simulationsmodellen, die auf herkömmliche Weise zumeist den Input bereitstellen. Ferner wird die Wirkungskette von der Messung, über die FEM-Simulation, Spannungsanalyse und Lebensdauerbewertung automatisiert (z.B. als mitlaufender Cloud-Service). Ferner wird ein selbstlernender Algorithmus bereitgestellt, der bereits in der Vergangenheit analysierte Prozessrandbedingungen und durchgeführte FEM-Analysen erkennt und bereits verfügbare Ergebnisse nutzt, insbesondere unmittelbar oder um einen Betriebspunkt regressiert.

Ferner umfassen die Daten bezüglich des Apparats vorteilhafterweise Temperaturmesswerte und/oder Temperaturrechenwerte und/oder mechanische Spannungen und/oder Dehnungen und/oder eine verbleibende Lebensdauer, die jeweils zu dem zweiten, früheren Zeitpunkt bestimmt wurden. Somit kann der selbstlernende Algorithmus zur Festigkeits- und Lebensdauerberechnung zum aktuellen ersten Zeitpunkt ferner zweckmäßigerweise auf bereits verfügbare, frühere Messwerte bzw. Simulationsergebnisse zurückgreifen.

Bevorzugt werden als Temperaturmesswerte Temperaturverteilungen in dem Apparat erhalten, insbesondere Tempertaturprofile bzw. Temperaturfelder. Insbesondere können diese Temperaturverteilungen bzw. Temperaturprofile mit den einzelnen Elementen bzw. Teilbereichen der Finite-Elemente-Methode korrelieren und zweckmäßigerweise einen Verlauf der Temperatur innerhalb und/oder zwischen diesen einzelnen Elementen abbilden und als Randbedingungen vorgeben werden. Insbesondere wird somit ein Temperaturfeld des Gesamtapparates in hinreichender Genauigkeit erfasst und direkt als Eingangsgröße für die Spannungsberechnung mittels der Finite-Elemente-Methode verwendet.

Vorzugsweise werden die Temperaturmesswerte mittels faseroptischer Temperatursensoren erfasst, insbesondere mittels Faser-Bragg-Gitter-Sensoren. In derartigen faseroptischen Temperatursensoren werden Temperaturverteilungen, Temperaturprofile bzw. Temperaturfelder entlang einer Glasfaser erfasst. Faseroptische Temperatursensoren können auf dem Raman-Effekt beruhen, wobei Licht in der Glasfaser aufgrund von Dichteschwankungen gestreut wird. In der Rückstreuung findet man neben dem elastischen Streuanteil aufgrund der Rayleigh-Streuung auf der gleichen Wellenlänge wie das eingestrahlte Licht auch zusätzliche Komponenten auf anderen Wellenlängen, die aufgrund der Raman-Streuung mit der Molekülschwingung und somit mit der lokalen Temperatur gekoppelt sind. Faser-Bragg-Gitter-Sensoren beruhen auf der temperaturabhängigen Änderung des Brechungsindex. Die Wellenlänge des eingestrahlten Lichts verschiebt sich dabei mit der Temperatur und der relativen Dehnung der Glasfaser.

Vorzugsweise werden die Randbedingungen für die Finite-Elemente-Methode in Form der Temperaturmesswerte während des laufenden Betriebs des Apparats erfasst. Zweckmäßigerweise werden die Randbedingungen somit insbesondere durch laufende Messungen vorgegeben und nicht durch komplexe thermo-hydraulische Simulationsmodelle.

Vorteilhafterweise erfolgen das Durchführen der Finite-Elemente-Methode und/oder das Bestimmen der mechanischen Spannung und/oder das Bestimmen der verbleibenden Lebensdauer online während des Betriebs des Apparats. Auf herkömmliche Weise ist eine laufende Lebendsaueranalyse des Apparats aufgrund der benötigten aufwendigen thermo-hydraulischen Simulationsmodelle während des Betriebs nicht möglich. Im Rahmen des vorliegenden Verfahrens wird es vorzugsweise möglich, mechanische Spannungen im Material von fluiddurchströmten verfahrenstechnischen Apparaten in Echtzeit bzw. online zu bestimmen und daraus die verbleibende Lebensdauer laufend abzuschätzen. Insbesondere ist auch eine nachträgliche und/oder bei Bedarf angefragte Analyse auf Basis von Bestandsdaten alternativ oder zusätzlich zur Echtzeit-Analyse möglich.

Vorzugsweise werden das Durchführen der Finite-Elemente-Methode und/oder das Bestimmen der mechanischen Spannung und/oder das Bestimmen der verbleibenden Lebensdauer in einer entfernten Recheneinheit durchgeführt. Insbesondere können zu diesem Zweck die erfassten Temperaturmesswerte von dem Apparat bzw. von einer an dem Apparat oder in dessen Nähe angeordneten lokalen Recheneinheit, z.B. einem Steuergerät, an die nicht lokale, entfernte Recheneinheit übermittelt werden. Als entfernte Recheneinheit sei in diesem Zusammenhang insbesondere eine Recheneinheit zu verstehen, welche nicht an dem Apparat angebracht ist, sich in einer sehr großen Entfernung zu diesem befinden kann und dabei nicht notwendigerweise im selben Gebäude befinden muss. Insbesondere ist die entfernte Recheneinheit als ein Server ausgebildet, zweckmäßigerweise als Teil eines entfernten, verteilten Recheneinheitssystems im Sinne des Cloud-Computing (deutsch etwa: Rechnen in der Wolke). Mittels des Cloud-Computing können IT-Infrastrukturen, wie z.B. Datenspeicher, dynamisch an den Bedarf angepasst und über ein Netzwerk zur Verfügung gestellt werden. Insbesondere kann die lokale Recheneinheit daher klein gebaut werden und die aufwendigeren Rechenoperationen können an die entfernte Recheneinheit, also an die Cloud ausgelagert werden. Insbesondere kann somit eine Wirkungskette von der Messung Temperaturmesswerte, über die Finite-Elemente-Methode, die Spannungsanalyse bis zur Lebensdauerbewertung automatisiert werden und beispielsweise als mitlaufender Cloud-Service bereitgestellt werden. Alternativ oder zusätzlich ist es denkbar, eine Modellregression und/oder eine Modellordnungsreduktion (engl. Model Order Reduction, MOR) für das FEM-Modell durchzuführen, welche geringen Rechenaufwand benötigen und auch in einer klein gebauten lokalen Recheneinheit durchgeführt werden können.

Eine Recheneinheit, z.B. ein Steuergerät eines Apparats, ist, insbesondere programmtechnisch, dazu eingerichtet, ein erfindungsgemäßes Verfahren durchzuführen.

Auch die Implementierung der Erfindung in Software ist vorteilhaft, da dies besonders geringe Kosten ermöglicht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere magnetische, elektrische und optische Datenträger, wie Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch und perspektivisch einen als Plattenwärmetauscher ausgebildeten fluiddurchströmten verfahrenstechnischen Apparat, dessen verbleibende Lebensdauer gemäß einer bevorzugten Ausführungsform eines erfindungsgemäßen Verfahrens ermittelt werden kann.
- Figur 2: zeigt eine bevorzugte Ausführungsform eines erfindungsgemäßen Verfahrens als ein Blockdiagramm.

### Detaillierte Beschreibung der Zeichnung

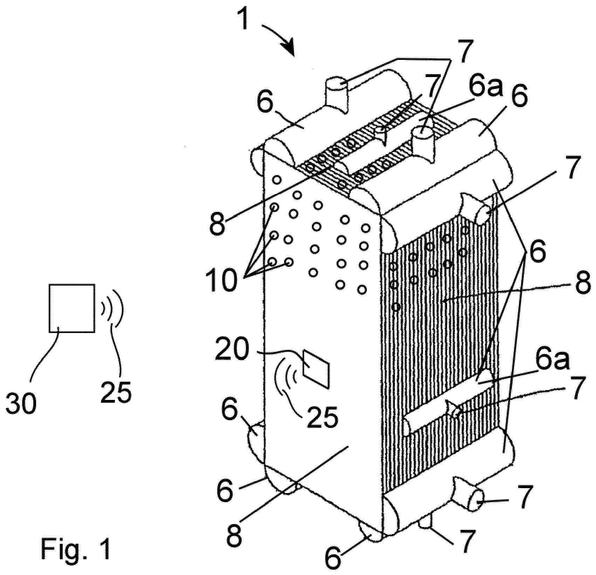

Figur 1 zeigt einen hier als Plattenwärmetauscher 1 ausgebildeten verfahrenstechnischen Apparat von außen. Der Plattenwärmetauscher weist einen quaderförmigen Zentralkörper 8 mit einer Länge von beispielsweise mehreren Metern und einer Breite bzw. Höhe von beispielsweise etwa einem bzw. wenigen Metern auf. Oben auf dem Zentralkörper 8, an dessen Seiten und unterhalb des Zentralkörpers 8 erkennt man Aufsätze 6 und 6a. Die unterhalb des Zentralkörpers 8 und auf der der abgebildeten Seite abgewandten Seite befindlichen Aufsätze 6 und 6a sind teilweise verdeckt.

Durch Stutzen 7 kann dem Plattenwärmetauscher ein Fluid bzw. Prozessstrom zugeführt bzw. diesem wieder entnommen werden. Die Aufsätze 6 und 6a dienen zur Verteilung des durch die Stutzen 7 eingebrachten Fluids bzw. zum Sammeln und zur Konzentration des aus dem Plattenwärmetauscher zu entnehmenden Fluids. Innerhalb des Plattenwärmetauschers tauschen dann die verschiedenen Fluidströme Wärmeenergie aus.

Der in Figur 1 gezeigte Plattenwärmetauscher ist dazu ausgelegt, Fluidströme in getrennten Passagen zum Wärmeaustausch aneinander vorbeizuführen. Ein Teil der Ströme kann gegensinnig aneinander vorbeigeführt werden, ein anderer Teil über Kreuz oder gleichsinnig.

Im Wesentlichen handelt es sich bei dem Zentralkörper 8 um eine Anordnung aus Trennblechen, Wärmeaustauschprofilen (sogenannte Fins) und Verteilerprofilen. Trennbleche und Profile aufweisende Schichten wechseln sich ab. Eine ein Wärmeaustauschprofil und Verteilerprofile aufweisende Schicht wird Passage genannt.

Der Zentralkörper 8 weist also abwechselnd parallel zu den Strömungsrichtungen liegende Passagen und Trennbleche auf. Sowohl die Trennbleche als auch die Passagen sind meist aus Aluminium gefertigt. Zu ihren Seiten sind die Passagen durch Seitenleisten aus Aluminium abgeschlossen, so dass durch die Stapelbauweise mit den Trennblechen eine Seitenwand ausgebildet ist. Die außenliegenden Passagen des Zentralkörpers sind durch eine parallel zu den Passagen und den Trennblechen liegende Abdeckung aus Aluminium (Deckblech) abgeschlossen.

Ein solcher Zentralkörper 8 kann hergestellt werden z.B. durch Aufbringen eines Lots auf die Flächen der Trennbleche und anschließendes abwechselndes Aufeinanderstapeln der Trennbleche und der Passagen. Die Abdeckungen decken den Zentralkörper 8 nach oben oder unten ab. Anschließend ist der Zentralkörper durch Erhitzen in einem Ofen verlötet worden.

An den Seiten des Plattenwärmetauschers weisen die Verteilerprofile Verteilerprofilzugänge(sog. Header oder Halbschalen) auf. Durch diese kann von außen das Fluid in die zugehörigen Passagen über die Aufsätze 6 und 6a und Stutzen 7 eingebracht bzw. auch wieder entnommen werden. Die Verteilerprofilzugänge werden durch die Aufsätze 6 bzw. 6a verdeckt.

Der Plattenwärmetauscher ist mit ausreichend vielen, hier als Faser-Bragg-Gitter-Sensoren ausgebildeten Temperatursensoren 10 ausgestattet, um Temperaturverläufe bzw. Temperaturfelder bzw. Temperaturprofile als Temperaturmesswerte zu erfassen. Wenngleich in Figur 1 die Temperatursensoren 10 untereinander relative große Abstände aufweisen, werden diese in der Praxis vorteilhaft eng verteilt, um die Temperaturverteilung in ausreichender Auflösung messen zu können.

Die Temperatursensoren 10 sind datenübertragend mit einer Recheneinheit 20 gekoppelt, die beispielsweise als Steuergerät des Wärmetauschers 1 ausgebildet sein kann. Die Recheneinheit 20 ist wiederum mit einer entfernten Recheneinheit 30 ("Cloud") datenübertragend gekoppelt, die insbesondere als ein Server ausgebildet ist, zweckmäßigerweise als Teil eines entfernten, verteilten Recheneinheitssystems im Sinne des Cloud-Computing. Das Steuergerät 20 steht zweckmäßigerweise mit der entfernten Recheneinheit 30 über ein Netzwerk 25 in Kommunikationsverbindung, insbesondere über das Internet.

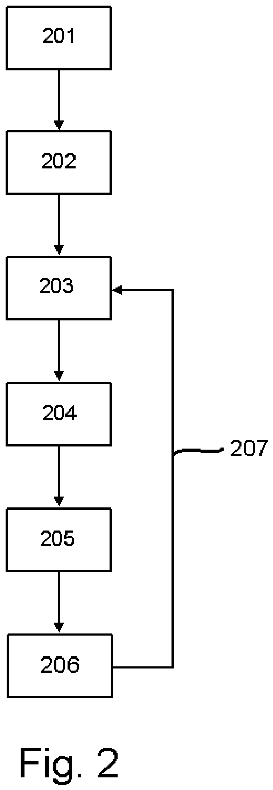

In Figur 2 ist eine bevorzugte Ausführungsform eines erfindungsgemäßen Verfahrens schematisch als ein Blockdiagramm dargestellt, im Zuge dessen eine verbleibende Lebensdauer des Wärmetauschers 1 ermittelt wird.

In einem Schritt 201 werden mittels der Faser-Bragg-Gitter-Sensoren 10 Temperaturverläufe bzw. Temperaturfelder des Wärmetauschers 1 als Temperaturmesswerte erfasst und von den Sensoren 10 an die Recheneinheit 20 übermittelt.

In Schritt 202 werden diese Temperaturmesswerte von der Recheneinheit 20 an die entfernte Recheneinheit bzw. die Cloud 30 übermittelt.

In der entfernten Recheneinheit 30 wird in Schritt 203 in Abhängigkeit von den erfassten Temperaturmesswerten eine Finite-Elemente-Methode durchgeführt. Die Temperaturmesswerte werden dabei als Randbedingungen für die Finite-Elemente-Methode verwendet, die online während des laufenden Betriebs des Wärmetauschers 1 erfasst werden.

In Schritt 204 werden als Ergebnisse der Finite-Elemente-Methode von der entfernten Recheneinheit 30 an unterschiedlichen Stellen in dem Wärmetauscher 1 herrschende mechanische Spannungen bestimmt. Im Zuge der Finite-Elemente-Methode wird der Wärmetauscher 1 in endlich viele Teilgebiete bzw. finite Elemente aufgeteilt. Das physikalische bzw. thermo-hydraulische Verhalten des gesamten Wärmetauscher 1 wird beim Übergang zwischen den einzelnen finiten Elementen durch vorbestimmte Stetigkeitsbedingungen nachgebildet. Somit werden in der entfernten Recheneinheit 30 im Zuge der Finite-Elemente-Methode ein komplexes System aus partiellen Differentialgleichungen numerisch gelöst, um als Ergebnis die mechanische Spannung des Wärmetauschers 1 zu bestimmen.

In Schritt 205 wird in der entfernten Recheneinheit 30 in Abhängigkeit von dieser bestimmten mechanischen Spannung eine verbleibende Lebensdauer des Wärmetauschers 1 bestimmt.

Die Lebensdauer des Wärmetauschers 1 wird maßgeblich von der Anzahl von Spannungsveränderungen einer gewissen Größe bestimmt, die z.B. beim Hochfahren, beim Wechsel zwischen unterschiedlichen Betriebsszenarios oder in Folge von Prozessstörungen, die zum Beispiel durch Maschinen- oder Ventilfehler verursacht sind, auftreten.

In Abhängigkeit von der in Schritt 204 bestimmten, in dem Material des Wärmetauschers 1 herrschenden mechanischen Spannung bzw. Spannungsniveaus oder Spannungsverläufen lässt sich daher in Schritt 205 die verbleibende Lebensdauer des Wärmetauschers 1 abschätzen.

Für detaillierte Erläuterungen, wie mit Hilfe der Finite-Elemente-Methode mechanische Spannungen eines Wärmetauschers bestimmt werden können und wie aus mechanischen Spannungen die verbleibende Lebensdauer eines Wärmetauschers bestimmbar ist, sei an dieser Stelle beispielsweise verwiesen auf Freko, 2014 (Freko "Optimization of Lifetime Expectance for Heat Exchangers with Special Requirements", Proc. IHTC15-9791, 2014), Wang et al, 2006 (Wang, C.G. and S. Shan, Review of Metamodeling Techniques in Support of Engineering Design Optimization, J. Mechanical Design (2006)), Hölzl, 2012 (Hölzl, Reinhold. 2012. Liftime Estimation of Aluminum Plate Fin Heat Exchangers. In: Proceedings of the ASME 2012 Pressure Vessels & Piping Division Conference) sowie auf die Patentschriften EP 1 830 149 B1 und US 7 788 073 B2.

Die Schritte 203 bis 205, also das Durchführen der Finite-Elemente-Methode, das Bestimmen der mechanischen Spannung und das Bestimmen der verbleibenden Lebensdauer werden von der entfernten Recheneinheit 30 online, also während des Betriebs des Wärmetauschers 1 durchgeführt.

Ferner werden von der entfernten Recheneinheit 30 in Schritt 206 die in Schritt 202 empfangenen Temperaturmesswerte sowie die Ergebnisse der Schritte 203 bis 205, also die durchgeführte Finite-Elemente-Methode, die bestimmte mechanische Spannung und die bestimmte verbleibende Lebensdauer hinterlegt, beispielsweise in einer Speichereinheit in der entfernten Recheneinheit 30.

Diese hinterlegten Daten werden zu einem späteren Zeitpunkt für eine erneute Bestimmung der verbleibenden Lebensdauer verwendet, angedeutet durch Bezugszeichen 207, wenn also zu einem späteren Zeitpunkt die Schritte 203 bis 205 erneut durchgeführt werden.

Somit wird ein selbstlernender Algorithmus bereitgestellt, der bereits in der Vergangenheit analysierte Prozessrandbedingungen und durchgeführte Finite-Elemente-Methoden erkennt und bereits verfügbare Ergebnisse nutzt.

Die in Figur 2 gezeigte bevorzugte Ausführungsform der vorliegenden Erfindung betrifft somit ein Verfahren zum fortlaufenden Bestimmen des Lebensdauerverbrauchs von verfahrenstechnischen Apparaten wie dem Wärmetauscher 1, die Thermostress ausgesetzt sind, auf Basis von hinreichend vielen Temperaturmessungen bzw. hinreichend genauer Bestimmung des Temperaturfeldes, z.B. mittels Faser-Bragg-Gitter-Sensoren, im Zuge einer automatisierten Finite-Elemente-Analyse und mittels eines selbstlernenden Algorithmus.

Dabei wird als verfahrenstechnische, thermo-hydraulische Randbedingungen für die in Schritt 203 durchgeführte Finite-Elemente-Methode zur Spannungsanalyse direkt auf Online-Messungen aus Schritt 201 zurückgegriffen anstelle von komplexen thermo-hydraulischen Simulationsmodellen.

Die Wirkungskette von der Messung 201 über die Finite-Elemente-Methode 203, die Spannungsanalyse 204 und die Lebensdauerbewertung 205 wird automatisiert z.B. als mitlaufender Cloud-Service, insbesondere im Zuge eines selbstlernenden Algorithmus, der bereits in der Vergangenheit analysierten Prozessrandbedingungen und durchgeführten FEM-Analysen erkennt und bereits verfügbare Ergebnisse nutzt (207).

Der Algorithmus kann dabei beispielsweise gemäß folgendem Wirkprinzip arbeiten: Wenn eine aktuelle Temperaturmessung bzw. eine durch aktuell gemessene Temperaturmesswerte definierte Temperaturverteilung oder Temperaturgradientenverteilung hinreichend ähnlich zu einer bereits in der Vergangenheit gemessenen Temperatur- bzw. Temperaturgradientenverteilung ist und von dieser höchstens um eine vorgegebene maximale zulässige Abweichung bzw. Unschärfe abweicht, kann das entsprechende bereits in der Vergangenheit bestimmte Ergebnis bezüglich des Lebensdauereinflusses herangezogen werden.

Alternativ kann der Fall eintreten, dass eine durch aktuell gemessene Temperaturmesswerte definierte Temperatur- oder Temperaturgradientenverteilung nicht hinreichend ähnlich zu einer bereits in der Vergangenheit gemessenen Temperatur- bzw. Temperaturgradientenverteilung ist und somit von sämtlichen bereits gemessenen Temperatur- bzw. Temperaturgradientenverteilungen jeweils um mehr als die vorgegebene maximal zulässige Abweichung bzw. Unschärfe abweicht. Wenn in diesem Fall die aktuelle Temperaturverteilung jedoch zwischen zwei bereits in der Vergangenheit bestimmten Temperaturverteilungen liegt, deren Ergebnisse bezüglich des Lebensdauereinflusses bereits untersucht wurden, so wird zweckmäßigerweise eine Interpolation durchgeführt. Ansonsten findet eine rigorose Neuberechnung für die aktuelle Temperaturverteilung statt.

Somit wird eine apparate-bezogene Online-Lebensdaueranalyse ermöglicht, die keine Spannungs-Regression von thermo-hydraulisch simulierten Verfahrenszuständen darstellt, sondern eine fortlaufende und selbstlernende Lebensdaueranalyse am realen Anlagenbetrieb ermöglicht.

## Patentansprüche

1. Verfahren zur Festigkeits- und Lebensdauerberechnung eines fluiddurchströmten verfahrenstechnischen Apparats (1),
wobei zu einem ersten Zeitpunkt an mehreren unterschiedlichen Stellen des Apparats (1) herrschende Temperaturen gemessen werden, um Temperaturmesswerte zu erhalten (201),
wobei die Temperaturmesswerte als Randbedingungen in eine Finite-Elemente-Methode eingehen (203), um an mehreren unterschiedlichen Stellen in einem Material des Apparats (1) herrschende mechanische Spannungen als Spannungswerte zu bestimmen (204),
wobei aus den erhaltenen Spannungswerten eine verbleibende Lebensdauer des Materials des Apparats (1) bestimmt wird (205),
wobei die verbleibende Lebensdauer des Apparats ferner in Abhängigkeit von Daten bezüglich des Apparats bestimmt wird, die zu einem zweiten Zeitpunkt bestimmt wurden (207), der früher als der erste Zeitpunkt ist.

2. Verfahren nach Anspruch 1, wobei die Daten bezüglich des Apparats Ergebnisse von Finite-Elemente-Methoden umfassen, die zu dem zweiten Zeitpunkt bestimmt wurden (207).

3. Verfahren nach Anspruch 1 oder 2, wobei die Daten bezüglich des Apparats ferner Temperaturmesswerte und/oder Temperaturrechenwerte und/oder mechanische Spannungen und/oder Dehnungen und/oder eine verbleibende Lebensdauer umfassen, die jeweils zu dem zweiten Zeitpunkt bestimmt wurden (207).

4. Verfahren nach einem der vorstehenden Ansprüche, wobei als Temperaturmesswerte Temperaturverteilungen in dem Apparat (1) erhalten werden (201).

5. Verfahren nach einem der vorstehenden Ansprüche, wobei die Temperaturmesswerte mittels faseroptischer Temperatursensoren erfasst werden, insbesondere mittels Faser-Bragg-Gitter-Sensoren (10).

6. Verfahren nach einem der vorstehenden Ansprüche, wobei die Randbedingungen für die Finite-Elemente-Methode in Form der Temperaturmesswerte während des laufenden Betriebs des Apparats erfasst werden (201, 203).

7. Verfahren nach einem der vorstehenden Ansprüche, wobei das Durchführen der Finite-Elemente-Methode (203) und/oder das Bestimmen der mechanischen Spannung (204) und/oder das Bestimmen der verbleibenden Lebensdauer (205) während des Betriebs des Apparats (1) und/oder in einer entfernten Recheneinheit (30) erfolgen.

8. Verfahren nach einem der vorstehenden Ansprüche, wobei der fluiddurchströmte verfahrenstechnischer Apparat (1) als ein Wärmetauscher, insbesondere als ein Plattenwärmetauscher oder Spiral- oder gewickelter Wärmetauscher, oder als eine Kolonne oder als ein Behälter zur Phasentrennung ausgebildet ist.

9. Verfahren nach einem der vorstehenden Ansprüche, wobei kein thermo-hydraulisches Simulationsmodell erstellt wird, wobei die Finite-Elemente-Methode und das Bestimmen der mechanischen Spannung ohne ein thermo-hydraulisches Simulationsmodell durchgeführt werden, wobei insbesondere Randbedingungen für die Finite-Elemente-Methode nicht durch ein thermo-hydraulisches Simulationsmodell bestimmt werden.

## Claims

1. Method for calculating the strength and the service life of a process apparatus (1) through which fluid flows,
temperatures prevailing at a plurality of different points of the apparatus (1) being measured at a first time point in order to obtain temperature measurement values (201),
the temperature measurement values being input into a finite element method (203) as boundary conditions, in order to determine mechanical stresses prevailing at a plurality of different points in a material of the apparatus (1) as stress values (204),
a remaining service life of the material of the apparatus (1) being determined from the obtained stress values (205), and
the remaining service life of the apparatus is further determined depending on data relating to the apparatus determined at a second time point (207) which is earlier than the first time point.

2. Method according to claim 1, wherein the data relating to the apparatus comprise the results of finite element methods determined at the second time point (207).

3. Method according to either claim 1 or claim 2, wherein the data relating to the apparatus further comprise temperature measurement values and/or temperature calculation values and/or mechanical stresses and/or strains and/or a remaining service life which were respectively determined at the second time point (207).

4. Method according to any of the preceding claims, wherein temperature distributions in the apparatus (1) are obtained as temperature measurement values (201).

5. Method according to any of the preceding claims, wherein the temperature measurement values are obtained by means of fiber-optic temperature sensors, in particular by means of fiber Bragg grating sensors (10).

6. Method according to any of the preceding claims, wherein the boundary conditions for the finite element method are obtained in the form of the temperature measurement values during the ongoing operation of the apparatus (201, 203).

7. Method according to any of the preceding claims, wherein the execution of the finite element method (203) and/or the determination of the mechanical stress (204) and/or the determination of the remaining service life (205) are carried out during the operation of the apparatus (1) and/or in a remote computing unit (30).

8. Method according to any of the preceding claims, wherein the process apparatus (1) through which a fluid flows is designed as a heat exchanger, in particular as a plate heat exchanger or spiral or coiled heat exchanger, or as a column or as a container for phase separation.

9. Method according to any of the preceding claims, wherein no thermo-hydraulic simulation model is created, wherein the finite element method and the determination of mechanical stress are carried out without a thermo-hydraulic simulation model, wherein, in particular, boundary conditions for the finite element method are not determined by a thermo-hydraulic simulation model.

## Revendications

1. Procédé permettant le calcul de la résistance et de la durée de vie d'un appareil (1) d'ingénierie des procédés traversé par un fluide,
dans lequel, à un premier moment, des températures régnant en plusieurs endroits différents de l'appareil (1) sont mesurées afin d'obtenir (201) des valeurs de mesure de température,
dans lequel les valeurs de mesure de température sont introduites (203) en tant que conditions marginales dans une méthode des éléments finis afin de déterminer (204) des tensions mécaniques régnant en plusieurs endroits différents dans un matériau de l'appareil (1) en tant que valeurs de tension,
dans lequel, à partir des valeurs de tension obtenues, une durée de vie restante du matériau de l'appareil (1) est déterminée (205), et
dans lequel la durée de vie restante de l'appareil est en outre déterminée en fonction de données concernant l'appareil, lesquelles ont été déterminées (207) à un second moment qui est antérieur au premier moment.

2. Procédé selon la revendication 1, dans lequel les données concernant l'appareil comprennent des résultats de méthodes des éléments finis qui ont été déterminés (207) au second moment.

3. Procédé selon la revendication 1 ou 2, dans lequel les données concernant l'appareil comprennent en outre des valeurs de mesure de température et/ou des valeurs de calcul de température et/ou des tensions mécaniques et/ou des allongements et/ou une durée de vie restante qui ont été respectivement déterminés (207) au second moment.

4. Procédé selon l'une des revendications précédentes, dans lequel des distributions de température dans l'appareil (1) sont obtenues (201) en tant que valeurs de mesure de température.

5. Procédé selon l'une des revendications précédentes, dans lequel les valeurs de mesure de température sont détectées au moyen de capteurs de température à fibre optique, en particulier au moyen de capteurs à fibre à réseau de Bragg (10).

6. Procédé selon l'une des revendications précédentes, dans lequel les conditions marginales pour la méthode des éléments finis sont détectées (201, 203) sous la forme de valeurs de mesure de température pendant le fonctionnement en cours de l'appareil.

7. Procédé selon l'une des revendications précédentes, dans lequel la mise en oeuvre de la méthode des éléments finis (203) et/ou la détermination de la tension mécanique (204) et/ou la détermination de la durée de vie restante (205) sont réalisées pendant le fonctionnement de l'appareil (1) et/ou dans une unité de calcul distante (30).

8. Procédé selon l'une des revendications précédentes, dans lequel l'appareil (1) d'ingénierie des procédés traversé par un fluide est conçu en tant qu'échangeur de chaleur, en particulier en tant qu'échangeur de chaleur à plaques ou échangeur de chaleur spiralé ou enroulé, ou en tant que colonne ou en tant que récipient pour la séparation de phases.

9. Procédé selon l'une des revendications précédentes, dans lequel aucun modèle de simulation thermo-hydraulique n'est créé, dans lequel la méthode des éléments finis et la détermination de la tension mécanique sont mises en oeuvre sans modèle de simulation thermo-hydraulique, dans lequel en particulier des conditions marginales pour la méthode des éléments finis ne sont pas déterminées par un modèle de simulation thermo-hydraulique.
